Europäisches Patentamt

European Patent Office

Office européen des brevets

(19)

(11) Veröffentlichungsnummer: **0 641 106 A1**

## (12) EUROPÄISCHE PATENTANMELDUNG

(21) Anmeldenummer: 93113740.0

(22) Anmeldetag: 27.08.93

(51) Int. Cl.⁶: **H04L 12/56**, H04Q 11/04

(43) Veröffentlichungstag der Anmeldung:
**01.03.95 Patentblatt 95/09**

(84) Benannte Vertragsstaaten:
**AT BE CH DE FR GB IT LI NL SE**

(71) Anmelder: **SIEMENS AKTIENGESELLSCHAFT**
**Wittelsbacherplatz 2**
**D-80333 München (DE)**

(72) Erfinder: **Hauber, Clemens, Dipl.-Ing.**
**Vorhoelzerstrasse 1**
**D-81477 München (DE)**

(54) **ATM-Vermittlungssystem.**

(57) In einem ATM-Vermittlungssystem mit wenigstens einem zwischen teilnehmerseitigen Anschlußleitungen und einem ATM-Vermittlungsnetzwerk liegenden ATM-(De-)Multiplexer sind in einem solchen ATM-(De-)Multiplexer

die n Ausgänge eines Vermittlungselements, dessen mn Eingänge mit mn teilnehmerseitigen Eingangsleitungen verbunden sind, mit n vermittlungsnetzwerkseitigen Ausgangsleitungen verbunden,

jeweils n Eingänge von m Vermittlungselementen, deren jeweils n Ausgänge mit jeweils n teilnehmerseitigen Ausgangsleitungen verbunden sind, mit n vermittlungsnetzwerkseitigen Eingangsleitungen verbunden

und die jeweils übrigen (m - 1)•n Eingänge dieser m Vermittlungselemente mit den jeweils n Ausgängen von (m - 1)•m zusätzlichen Vermittlungselementen verbunden, deren jeweils mn Eingänge mit den mn teilnehmerseitigen Eingangsleitungen verbunden sind.

In neueren Enwicklungen der Telekommunikationstechnik - und hier in der Entwicklung diensteintegrierender Breitbandnetze (B-ISDN) - spielt der auf asynchroner Zeitmultiplextechnik basierende Asynchrone Transfer-Modus (ATM) eine wesentliche Rolle, demzufolge die Signalübertragung in einem Bitstrom vor sich geht, der in - jeweils aus Kopf und Nutzinformationsteil bestehende - Zellen konstanter Länge von z.B. 53 Oktetts unterteilt ist, die je nach Bedarf mit paketierten Nachrichten belegt werden; ist gerade keine Nutzinformation zu übermitteln, so werden spezielle Leerzellen übertragen. In ATM-Vermittlungsstellen werden virtuelle Verbindungen aufgebaut, d.h. Verbindungen, die nur dann einen Wegeabschnitt tatsächlich benutzen, wenn über diesen tatsächlich ein Nachrichtenpaket (Block) zu übermitteln ist, wobei jedes Paket in seinem Kopf u.a. eine z.B. 2 Oktetts umfassende Adresse zur eindeutigen Zuordnung des Pakets zu einer bestimmten virtuellen Verbindung enthält. Dabei kann jedes Paket am Eingang zum Vermittlungsnetzwerk nach Maßgabe der jeweiligen Wahlinformation die komplette Information für seinen Weg durch das Vermittlungsnetzwerk erhalten; mit Hilfe dieser Information schalten die Vermittlungselemente dann das Paket auf dem festgelegten Weg selbst durch (self-routing network) (siehe z.B. telcom report 11(1988)6, 210...213).

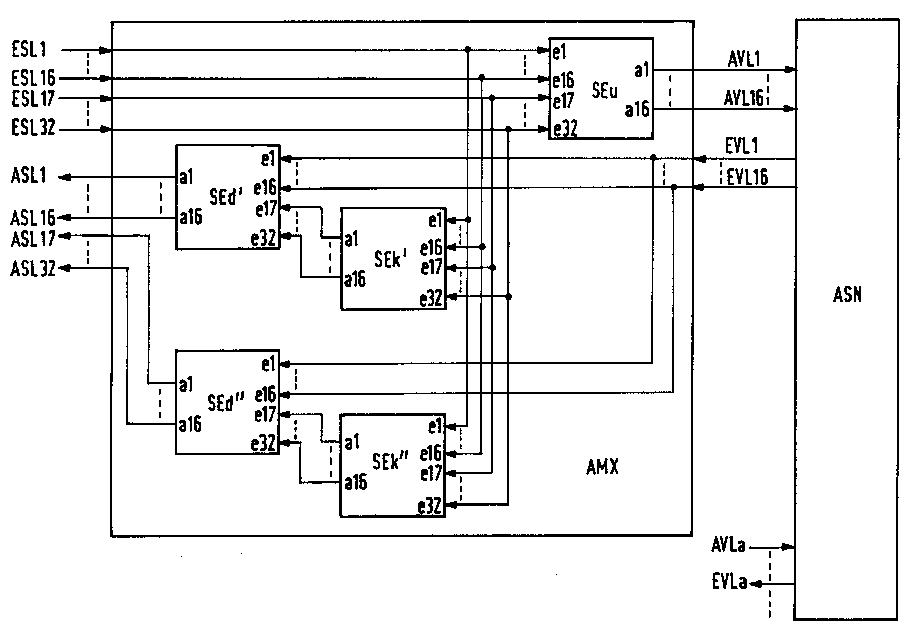

Als Vermittlungsnetzwerk kann dabei ein zweistufiges Umkehr-Vermittlungsnetzwerk mit (2nx2n)-ATM-Vermittlungsmodulen vorgesehen sein, die ihrerseits jeweils mit einer Mehrzahl von Vermittlungselementen zur Vermittlung (Routing und Queueing) von ATM-Zellen von 2n Simplex-Eingängen über einen vorzugsweise zentralen ATM-Zellen-Speicher zu n Simplex-Ausgängen gebildet sein können (IEEE Journal on Selected Areas in Communications, Vol.9, No.8, Oct.1991, 1299 ... 1307, Fig.3, 5, 7, 8); zwischen teilnehmerseitigen Anschlußleitungen und ATM-Vermittlungsnetzwerk kann auch ein ATM-(De-)Multiplexer eingefügt sein, der ebenfalls mit einer Mehrzahl von Vermittlungselementen zur Vermittlung (Routing und Queueing) von ATM-Zellen von 2n Simplex-Eingängen über einen vorzugsweise zentralen ATM-Zellen-Speicher zu n Simplex-Ausgängen gebildet sein kann (IEEE Journal on Selected Areas in Communications, a.a.O., S. 1301 und Fig.2).

Für ein solches ATM-Vermittlungssystem ist es bereits bekannt (EP-92113450.8), in der ersten Stufe des ATM-Vermittlungsnetzwerks auch Kurzwege durchschalten zu können, über die Eingangsleitungen mit Ausgangsleitungen des ATM-Vermittlungsnetzwerks ohne Inanspruchnahme der zweiten Stufe des ATM-Vermittlungsnetzwerks verbunden werden.

In einem ATM-Vermittlungssystem, in dem zwischen teilnehmerseitigen Anschlußleitungen und ATM-Vermittlungsnetzwerk noch ein ATM-(De-)Multiplexer liegt, erhebt sich nun ggf. auch die Forderung nach Kurzwegen schon in einem solchen (De-)Multiplexer, und die Erfindung zeigt dazu einen Weg.

Die Erfindung betrifft ein **ATM-Vermittlungssystem** mit wenigstens einem zwischen teilnehmerseitigen Anschlußleitungen und einem ATM-Vermittlungsnetzwerk liegenden ATM-(De-)Multiplexer,

bei **dem** das ATM-Vermittlungsnetzwerk mit einer Mehrzahl von in Stufen angeordneten, jeweils ebenso viel Simplex-Eingänge wie Simplex-Ausgänge aufweisenden ATM-Vermittlungsmodulen gebildet sein kann,

bei **dem** ein ATM-Vermittlungsmodul bzw. ein ATM-(De-)Multiplexer jeweils mit einer Mehrzahl von Vermittlungselementen zur Vermittlung (Routing und Queueing) von ATM-Zellen von einer Mehrzahl von vorzugsweise 2n Simplex-Eingängen über einen vorzugsweise zentralen ATM-Zellen-Speicher zu einer Mehrzahl von vorzugsweise n Simplex-Ausgängen gebildet sein kann,

bei **dem** Duplex-Anschlußleitungen jeweils durch eine Simplex-Eingangsleitung und eine Simplex-Ausgangsleitung gegeben sind;

dieses ATM-Vermittlungssystem ist erfindungsgemäß dadurch gekennzeichnet, daß in einem solchen ATM-(De-)Multiplexer die n Ausgänge eines Vermittlungselements, dessen mn Eingänge (mit m ≥ 1) mit mn teilnehmerseitigen Eingangsleitungen verbunden sind, mit n vermittlungsnetzwerkseitigen Ausgangsleitungen verbunden sind,

jeweils n Eingänge von m Vermittlungselementen, deren jeweils n Ausgänge mit jeweils n teilnehmerseitigen Ausgangsleitungen verbunden sind, mit n vermittlungsnetzwerkseitigen Eingangsleitungen verbunden sind,

und die jeweils übrigen (m - 1)•n Eingänge dieser m Vermittlungselemente mit den jeweils n Ausgängen von (m - 1)•m zusätzlichen Vermittlungselementen verbunden sind, deren jeweils mn Eingänge mit den mn teilnehmerseitigen Eingangsleitungen verbunden sind.

In weiterer Ausgestaltung der Erfindung kann gerade m = 2 sein, so daß in einem solchen ATM-(De-)Multiplexer

die n Ausgänge eines Vermittlungselements, dessen 2n Eingänge mit 2n teilnehmerseitigen Eingangsleitungen verbunden sind, mit n vermittlungsnetzwerkseitigen Ausgangsleitungen verbunden sind,

jeweils n Eingänge zweier Vermittlungselemente, deren jeweils n Ausgänge mit jeweils n teilnehmerseitigen Ausgangsleitungen verbunden sind, mit n vermittlungsnetzwerkseitigen Eingangsleitungen verbunden sind,

und die jeweils übrigen n Eingänge dieser zwei Vermittlungselemente mit den jeweils n Ausgängen zweier zusätzlicher Vermittlungselemente verbunden sind, deren jeweils 2n Eingänge mit den 2n teilnehmerseitigen Eingangsleitungen verbunden sind.

Die Erfindung bringt den Vorteil mit sich, daß alle über das ATM-Vermittlungsnetzwerk laufenden Verbindungen im ATM-(De-)Multiplexer die gleiche minimale Anzahl von gerade einem Vermittlungselement (je Übertragungsrichtung) durchlaufen, was sich entsprechend günstig auf die Gesamt-Verzögerungsdauern auswirkt; alle Kurzwegverbindungen durchlaufen im ATM-(De-)Multiplexer gerade zwei Vermittlungselemente.

Anhand der Zeichnung sei die Erfindung noch näher erläutert.

Die Zeichnung zeigt in einem zum Verständnis der Erfindung erforderlichen Umfange ein Ausführungsbeispiel eines ATM-Vermittlungssystems gemäß der Erfindung. Dieses ATM-Vermittlungssystem weist auf der einen Seite Duplexanschlußleitungen, die jeweils durch eine Simplex-Eingangsleitung ESL1, ..., ESL16, ESL17, ..., ESL32 und eine Simplex-Ausgangsleitung ASL1, ..., ASL16, ASL17, ..., ASL32 gegeben sind, und auf der anderen Seite ein ATM-Vermittlungsnetzwerk ASN auf; zwischen den teilnehmerseitigen Anschlußleitungen ESL1/ASL1, ..., ESL32/ASL32 und dem ATM-Vermittlungsnetzwerk ASN liegt ein ATM-(De-)Multiplexer AMX. Wie in der Zeichnung angedeutet ist, ist dabei an das ATM-Vermittlungsnetzwerk ASN nicht nur der ATM-(De-)Multiplexer AMX über seine Ausgangsleitungen AVL1 ... AVL16 und Eingangsleitungen EVL1 ... EVL16 angeschlossen; das ATM-Vermittlungsnetzwerk ASN möge vielmehr auch mit einer Vielzahl anderer Anschlußleitungen AVLa, ...; EVLa, ... versehen sein, über die das ATM-Vermittlungsnetzwerk ASN mit anderen teilnehmerseitigen Anschlußleitungen, Verbindlungsleitungen, ATM-(De-)Multiplexern, ATM-Vermittlungsnetzwerken oder sonstigen Einrichtungen verbunden sein kann.

Die Anschlußleitungen ESL1/ASL1 ... ESL32/ASL32 können jeweils an ihrem in der Zeichnung freien Ende mit einem (beispielsweise aus IEEE Journal on Selected Areas in Communications, a.a.O., Fig. 6, bekannten) teilnehmerindividuell vorgesehenen Subscriber Line Modul Broadband (SLMB) oder mit einer Digital Interface Unit (DIU) verbunden sein, wie dies an sich (z.B. aus IEEE Journal on Selected Areas in Communications, a.a.O., Fig. 2) bekannt ist und daher hier nicht weiter ausgeführt werden muß.

Das ATM-Vermittlungsnetzwerk ASN kann mit einer Mehrzahl von in Stufen angeordneten, jeweils ebensoviel Simplex-Eingänge wie Simplex-Ausgänge aufweisenden ATM-Vermittlungsmodulen gebildet sein, wie dies ebenfalls an sich (z.B. aus IEEE Journal on Selected Areas in Communications, a.a.O., Fig. 7 und 8) bekannt ist und somit hier ebenfalls nicht weiter ausgeführt werden muß.

Dabei kann ein ATM-Vermittlungsmodul jeweils mit einer Mehrzahl von Vermittlungselementen zur Vermittlung (Routing und Queueing) von ATM-Zellen von 2n Simplex-Eingängen über einen vorzugsweise zentralen ATM-Zellen-Speicher zu n Simplex-Ausgängen gebildet sein; auch dies ist (z.B. aus IEEE Journal on Selected Areas in Communications, a.a.O., Fig. 5) an sich bekannt und braucht hier nicht weiter ausgeführt zu werden.

Solche ATM-Vermittlungselemente zur Vermittlung (Routing und Queueing) von ATM-Zellen von einer Mehrzahl von vorzugsweise 2n Simplex-Eingängen über einen zentralen ATM-Zellen-Speicher zu einer Mehrzahl von vorzugsweise n Simplex-Ausgängen sind schließlich ebenfalls schon (z.B. aus telcom report 11(1986)6, 210 ... 213, Bild 5, und IEEE Journal on Selected Areas in Communications, a.a.O., Fig. 3) an sich bekannt, so daß es auch hier keiner näheren Ausführungen bedarf.

Auch der ATM-(De-)Multiplexer AMX ist mit ATM-Vermittlungselementen zur Vermittlung (Routing und Queueing) von ATM-Zellen von einer Mehrzahl von vorzugsweise 2n Simplex-Eingängen über einen vorzugsweise zentralen ATM-Zellen-Speicher zu einer Mehrzahl von vorzugsweise n Simplex-Ausgängen gebildet; diese ATM-Vermittlungselemente sind in der Zeichnung mit SE bezeichnet:

Betrachtet man zunächst die Übertragungsrichtung (upstream) von den teilnehmerseitigen Eingangsleitungen ESL1, ..., ESL16, ESL17, ..., ESL 32 zu den vermittlungsseitigen Ausgangsleitungen AVL1, ... AVL16, in welcher der ATM-(De-)Multiplexer AMX in seiner Multiplexerfunktion wirksam ist, so ist hier ein Vermittlungselement SEu vorgesehen, dessen n Ausgänge a1, ... a16 mit den n vermittlungsnetzwerkseitigen Ausgangsleitungen AVL1, ..., AVL16 verbunden sind und dessen mn Eingänge e1, ..., e16, e17,...., e32 (mit m ≥ 1) mit den mn teilnehmerseitigen Eingangsleitungen ESL1, ..., ESL16, ESL17, ..., ESL32 verbunden sind. Im Ausführungsbeispiel ist angedeutet, daß n = 16 und mn = 32, mithin m = 2, sein kann.

In der umgekehrten Übertragungsrichtung (downstream) von den vermittlungsnetzwerkseitigen Eingangsleitungen EVL1, ..., EVL16 zu den teilnehmerseitigen Ausgangsleitungen ASL1, ..., ASL16, ASL17, ..., ASL32, in welcher der ATM-(De-)Multiplexer AMX in seiner Demultiplexerfunktion wirksam ist, sind im Ausführungsbeispiel zwei Vermittlungselemente SEd' und SEd'' vorgesehen, bei denen jeweils die ersten n Eingänge e1, ..., e16 mit den vermittlungsnetzwerkseitigen Eingangsleitungen EVL1, ...., EVL16 verbunden sind und deren jeweils n Ausgänge a1, ..., a16 mit jeweils n teilnehmerseitigen Ausgangsleitungen ASL1, ...,

ASL16 bzw. ASL17, ..., ASL32 verbunden sind. Über die genannten drei Vermittlungselemente SEu sowie SEd' und SEd'' verlaufen alle von den teilnehmerseitigen Anschlußleitungen ESL1/ASL1, ..., ESL32/ASL32 ausgehenden bzw. dorthin führenden Verbindungen, die über das ATM-Vermittlungsnetzwerk ASN geführt werden; dabei wird es sich primär um Verbindungen zu bzw. von den schon erwähnten weiteren Anschlußleitungen EVLa/AVLa, ... des ATM-Vermittlungsnetzwerks ASN handeln. Diese Verbindungen durchlaufen im ATM-(De-)Multiplexer AMX in jeder Übertragungsrichtung gerade nur ein Vermittlungselement (SEu bzw. SEd).

Neben solchen über das ATM-Vermittlungsnetzwerk ASN verlaufenden Verbindungen insbesondere zu/von dessen weiteren Anschlußleitungen EVLa/AVLa, ... ermöglicht der in der Zeichnung skizzierte ATM-(De-)Multiplexer AMX nun zwischen an ihn angeschlossenen teilnehmerseitigen Eingangsleitungen ESL1, ..., ESL32 und Ausgangsleitungen ASL1, .. .. ASL32 auch Kurzweg-Verbindungen, die allein mittels des ATM-(De-)Multiplexers AMX durchgeschaltet werden, ohne das ATM-Vermittlungsnetzwerk ASN zu berühren. Hierzu sind in dem in der Zeichnung skizzierten Ausführungsbeispiel zwei zusätzliche ATM-Vermittlungselemente SEk', SEk'' vorgesehen, deren jeweils 2n Eingänge e1, ..., e16, e17, ..., e32 ebenfalls mit den 2n teilnehmerseitigen Eingangsleitungen ESL1, ..., ESL16, ESL17, ..., ESL32 verbunden sind und deren jeweils n Ausgänge a1, ..., a16 zu den jeweils n übrigen Eingängen e17, ..., e32 der zwei schon zuvor erwähnten Vermittlungselemente SEd', SEd'' führen. Soll dann beispielsweise die teilnehmerseitige Eingangsleitung ESL1 mit der teilnehmerseitigen Ausgangsleitung ASL32 verbunden werden, dann braucht eine solche Verbindung nicht über das ATM-Vermittlungselement SEu des ATM-(De-)Multiplexers AMX und eine seiner vermittlungsnetzwerkseitigen Ausgangsleitungen AVL1, ..., AVL16 in das ATM-Vermittlungsnetzwerk ASN und von hier aus zurück über eine der vermittlungsnetzwerkseitigen Eingangsleitungen EVL1, ...., EVL16 des ATM-(DE-)Multiplexers AMX und dessen ATM-Vermittlungselement SEd'' geführt zu werden; es kann vielmehr bereits innerhalb des ATM-(De-)Multiplexers AMX ein Kurzweg geschaltet werden, der von der teilnehmerseitigen Eingangsleitung ESL1 über das zusätzliche ATM-Verbindungselement SEk'' und weiter über das ATM-Vermittlungselement SEd'' zur teilnehmerseitigen Ausgangsleitung ASL32 verläuft. In entsprechender Weise kann etwa auch die teilnehmerseitige Eingangsleitung ESL32 mit der teilnehmerseitigen Ausgangsleitung ASL1 verbunden werden, ohne daß dies hier noch weiterer Ausführungen bedarf.

**Patentansprüche**

1. **ATM-Vermittlungssystem** mit wenigstens einem zwischen teilnehmerseitigen Anschlußleitungen (SL) und einem ATM-Vermittlungsnetzwerk (ASN) liegenden ATM-(De-)Multiplexer (AMX),

   bei **dem** das ATM-Vermittlungsnetzwerk (ASN) mit einer Mehrzahl von in Stufen angeordneten, jeweils ebenso viel Simplex-Eingänge wie Simplex-Ausgänge aufweisenden ATM-Vermittlungsmodulen gebildet sein kann,

   bei **dem** ein ATM-Vermittlungsmodul bzw. ein ATM-(De-)Multiplexer (AMX) jeweils mit einer Mehrzahl von Vermittlungselementen zur Vermittlung (Routing und Queueing) von ATM-Zellen von einer Mehrzahl von vorzugsweise 2n Simplex-Eingängen über einen vorzugsweise zentralen ATM-Zellen-Speicher zu einer Mehrzahl von vorzugsweise n Simplex-Ausgängen gebildet sein kann,

   bei **dem** Duplex-Anschlußleitungen (SL; VL) jeweils durch eine Simplex-Eingangsleitung (ESL; EVL) und eine Simplex-Ausgangsleitung (ASL; AVL) gegeben sind,

   **dadurch gekennzeichnet,**

   daß in einem solchen ATM-(De-)Multiplexer (AMX) die n Ausgänge (a1 ... a16) eines Vermittlungselements (SEu), dessen mn Eingänge (e1 ... e32) mit mn teilnehmerseitigen Eingangsleitungen (ESL1 ... ESL32) verbunden sind, mit n vermittlungsnetzwerkseitigen Ausgangsleitungen (AVL1 ... AVL16) verbunden sind,

   jeweils n Eingänge (e1 ... ) von m Vermittlungselementen (SEd'; SEd''), deren jeweils n Ausgänge (a1 ... a16) mit jeweils n teilnehmerseitigen Ausgangsleitungen (ASL1, ...; ..., ASL32) verbunden sind, mit n vermittlungsnetzwerkseitigen Eingangsleitungen (EVL1 ... EVL16) verbunden sind und die jeweils übrigen (m - 1)•n Eingänge (..., e32) dieser m Vermittlungselemente (SEd'; SEd'') mit den jeweils n Ausgängen (a1 ... a16) von (m - 1)•m zusätzlichen Vermittlungselementen (SEk', SEk'') verbunden sind, deren jeweils mn Eingänge (e1 ... e32) mit den mn teilnehmerseitigen Eingangsleitungen (ESL1 ... ESL32) verbunden sind.

2. ATM-Vermittlungssystem nach Anspruch 1,
   **dadurch gekennzeichnet,**
   daß in einem solchen ATM-(De-)Multiplexer (AMX) die n Ausgänge (a1 ... a16) eines Vermittlungselements (SEu), dessen 2n Eingänge (e1 ... e32) mit 2n teilnehmerseitigen Eingangsleitungen (ESL1 ... ESL32) verbunden sind, mit n vermittlungsnetzwerkseitigen Ausgangsleitungen (AVL1 ... AVL16) verbunden sind,

jeweils n Eingänge (e1 ..., e16) zweier Vermittlungselemente (SEd'; SEd''), deren jeweils n Ausgänge (a1 ... a16) mit jeweils n teilnehmerseitigen Ausgangsleitungen (ASL1, ...; ..., ASL32) verbunden sind, mit n vermittlungsnetzwerkseitigen Eingangsleitungen (EVL1 ... EVL16) verbunden sind

und die jeweils übrigen n Eingänge (e17, ..., e32) dieser zwei Vermittlungselemente (SEd'; SEd'') mit den jeweils n Ausgängen (a1 ... a16) zweier zusätzlicher Vermittlungselemente (SEk', SEk'') verbunden sind, deren jeweils 2n Eingänge (e1 ... e32) mit den 2n teilnehmerseitigen Eingangsleitungen (ESL1 ... ESL32) verbunden sind.

ESL1
ESL16
ESL17
ESL32

ASL1

ASL16
ASL17

ASL32

e1
e16
e17
SEu
a1
a16
e32

AVL1
AVL16

EVL1
EVL16

a1
SEd'
a16
e1
e16
e17
e32

a1
SEk'
a16
e1
e16
e17
e32

a1
SEd''
a16
e1
e16
e17
e32

a1
SEk''
a16
e1
e16
e17
e32

AMX

ASN

AVLa
EVLa

EP 0 641 106 A1

| | Europäisches Patentamt | EUROPÄISCHER RECHERCHENBERICHT | Nummer der Anmeldung EP 93 11 3740 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | ELECTRONICS AND COMMUNICATIONS IN JAPAN Bd. 75, Nr. 7 , Juli 1992 , US Seiten 34 - 46 XP330975 S.OKAMATO * Abschnitt 2.1 * | 1,2 | H04L12/56 H04Q11/04 |
| D,Y | IEEE SELECTED AREAS IN COMMUNICATIONS Bd. 9, Nr. 8 , Oktober 1991 , US Seiten 1299 - 1307 XP267581 W. FISCHER ET AL * Abschnitt II.B ; II.E 1) * | 1,2 | |
| A | US-A-5 214 640 (SAKURAI ET AL) * Spalte 10, Zeile 62 - Spalte 11, Zeile 26 * | 1,2 | |
| A | EP-A-0 323 835 (NEC) * Spalte 16, Zeile 3 - Spalte 17, Zeile 32 * | 1,2 | |

RECHERCHIERTE SACHGEBIETE (Int.Cl.6)

H04L
H04Q

Der vorliegende Recherchenbericht wurde für alle Patentansprüche erstellt

| Recherchenort | Abschlußdatum der Recherche | Prüfer |
|---|---|---|
| DEN HAAG | 4. Februar 1994 | Ali, A |

EPO FORM 1503 03.82 (P04C03)